(19) **Europäisches Patentamt / European Patent Office / Office européen des brevets**

(11) **EP 2 544 507 A1**

(12) **EUROPEAN PATENT APPLICATION**
published in accordance with Art. 153(4) EPC

(43) Date of publication:
**09.01.2013 Bulletin 2013/02**

(21) Application number: **11750314.4**

(22) Date of filing: **15.02.2011**

(51) Int Cl.:
**H05B 6/12** *(2006.01)*

(86) International application number:
**PCT/JP2011/000822**

(87) International publication number:
**WO 2011/108200 (09.09.2011 Gazette 2011/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2010 JP 2010047605**

(71) Applicants:
  • **Mitsubishi Electric Corporation**
    **Tokyo 100-8310 (JP)**
  • **Mitsubishi Electric Home Appliance Co., Ltd.**
    **Fukaya-shi, Saitama 369-1295 (JP)**

(72) Inventors:
  • **MASUDA, Ichiro**
    **Fukaya-shi**
    **Saitama 369-1295 (JP)**
  • **ENOKIZONO, Satoshi**
    **Fukaya-shi**
    **Saitama 369-1295 (JP)**
  • **KAWAMURA, Takeshi**
    **Tokyo 102-0073 (JP)**

(74) Representative: **Pfenning, Meinig & Partner GbR**
    **Patent- und Rechtsanwälte**
    **Theresienhöhe 13**
    **80339 München (DE)**

(54) **INDUCTION HEATING COOKWARE**

(57) Arranging a group of induction heating coils, each heating a pot by induction, under a top plate 2. This group of induction heating coils includes a left side induction heating coil 4a that has an outer diameter substantially matching a bottom diameter of an extra-large pot, a right side induction heating coil 4b for a moderate size pan in which the induction heating coil 4b has an outer diameter smaller than the outer diameter of the induction heating coil 4a, and a center-back-side induction heating coil 4c for a small size pan in which the induction heating coil 4c has an outer diameter smaller than the outer diameter of the induction heating coil 4b. The outer diameter of the induction heating coil 4a is 1.5 to 2 times the outer diameter of the induction heating coil 4. Further, a position of a forefront edge of the induction heating coil 4a and a position of a forefront edge of the induction heating coil 4b are the same in the front-back direction. Furthermore, an outer diameter and a position of a forefront edge of each print 3a, 3b, and 3c printed on the top plate 2 corresponding to the induction heating coils 4a, 4b, and 4c, respectively, are the same as above.

FIG. 1

## Description

Technical Field

The present invention relates to an induction cooking system.

Background Art

There is a conventional induction cooking system that includes a flat top plate, and a pot placed on this top plate is heated by induction with the alternating magnetic field generated by the induction heating coil disposed under this top plate. Accordingly, a pan can be heated without the use of fire. Conventional induction cooking systems are known including at latest two induction heating coils in which two induction heating coils having the same outer diameter are typically arranged on the right and left front side viewed from the user (for example, Patent Literatures 1 and 2).

Citation List

Patent Literature

Patent Literature 1: Japanese Unexamined Patent Application Publication No. 2002-198164 (Figs. 1 to 4)
Patent Literature 2: Japanese Unexamined Patent Application Publication No. 2005-005132 (pp. 4 to 6, Fig. 2)

Summary of Invention

Technical Problem

However, since the conventional examples disclosed in Patent Literature 1 and Patent Literature 2 are configured as above, when using a nonstandard extra-large pot (for example, an extra-large pot having a bottom diameter 1.5 to 2 times larger than the outer diameter of the induction heating coil), the portion of the pot bottom outside of the outer circumference of the induction heating coil is not only unheated but heat escapes from this portion. Consequently, this adversely affects the heating efficiency (cooking efficiency) disadvantageously.
Further, when cooking with an extra-large pot, which is so especially large that the pot covers a portion of both of the right and left adjoining heating coils, since the pot cannot be placed on the adjoining heating coil, cooking is disturbed which disadvantageously becomes the cause of drop in cooking efficiency. Additionally, in the induction heating coil having only a portion of the extra-large pot placed thereon, electromagnetic field leaks out from the portion of the extra-large pot not placed on the induction heating coil, thus disadvantageously consuming wasteful energy.
Furthermore, when, in order to overcome such a problem, the extra-large pot is shifted so as not to be placed on the adjoining induction heating coil, there are cases in which the extra-large pot comes into contact with a surrounding wall causing escape of heat through the wall. Because of this, the user has to continuously see to it that the extra-large pot does not come into contact with the surrounding wall, thus disadvantageously causes the cooking to become bothersome.
The invention has been made to overcome the above disadvantages and a main object thereof is to obtain an induction cooking system that is capable of cooking with an extra-large pot having a bottom diameter 1.5 to 2 times larger than a bottom diameter of a typically known large-size pot.

Solution to Problem

The induction cooking system of the invention includes a body including a housing chamber housing a group of induction heating coils; and a top plate on which a heated object cooking with the induction heating coil is placed, the top plate being disposed on the upper portion of the body, in which the group of induction heating coils includes a first induction heating coil and a second induction heating coil, and an outer diameter of the first induction heating coil is 1.5 to 2 times an outer diameter of the second induction heating coil.

Advantageous Effects of Invention

According to the invention, since the group of induction heating coils includes an induction heating coil that has an outer diameter 1.5 to 2 times that of the other induction heating coils, cooking with an extra-large pot can be carried out.

Brief Description of Drawings

[Fig. 1] Fig. 1 is a perspective view illustrating an appearance of an induction cooking system according to Embodiment 1 of the invention in which a top plate is removed.
[Fig. 2] Fig. 2 is a plan view of a body 1 of the induction cooking system according to Embodiment 1 of the invention.
[Fig. 3] Fig. 3 is an explanatory diagram illustrating the relation of outer diameters of induction heating coils and a limit of a housing space in a housing chamber in the body 1 of the induction cooking system according to Embodiment 1 of the invention.
[Fig. 4] Fig. 4 is another exemplary arrangement of the induction cooking system according to Embodiment 1 of the invention.

Description of Embodiments

Embodiment 1

Now, a three-port induction cooking system with three heating ports is cited as an example, and description is given of a case in which the front left heating port of the induction heating coil is for an extra-large pot.

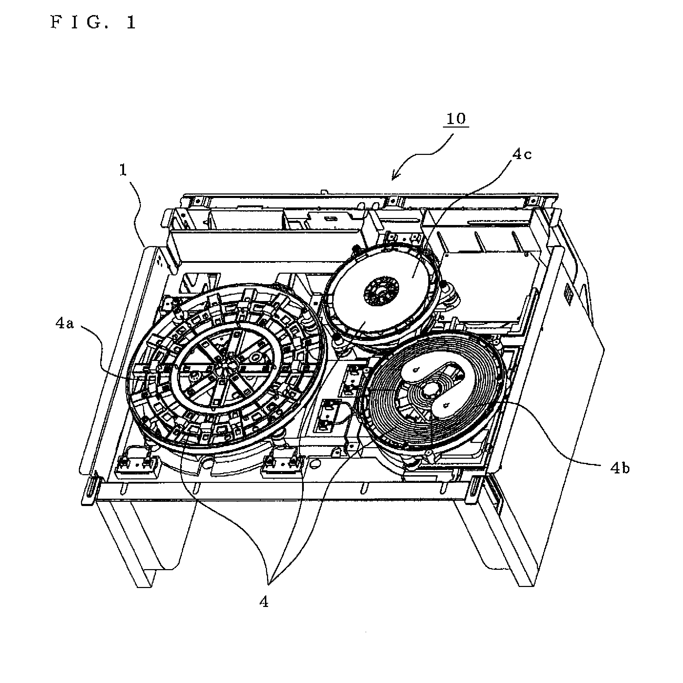

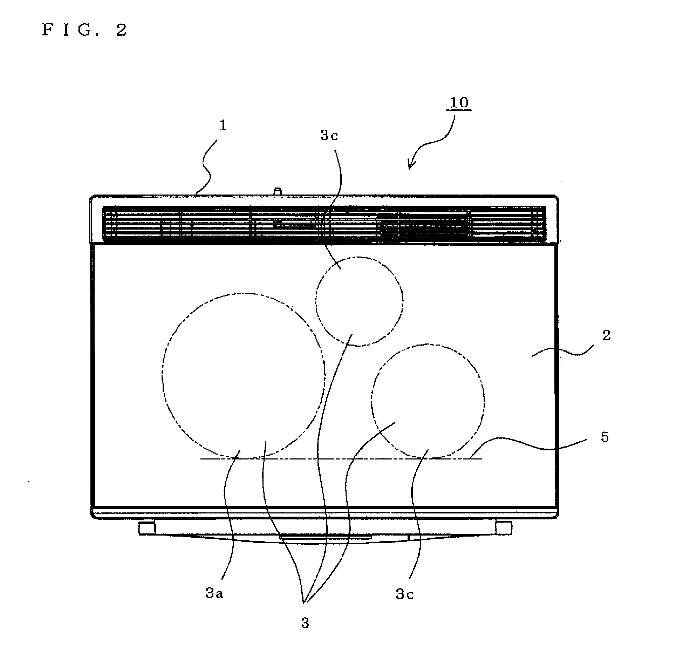

Fig. 1 is a perspective view illustrating an appearance of the induction cooking system according to Embodiment 1 of the invention in which a top plate is removed, and Fig. 2 is a plan view of a body 1 of the induction cooking system according to Embodiment 1 of the invention. In Figs. 1 and 2, an induction cooking system 10 includes the body 1, and includes a top plate 2 and a control display unit (not shown) disposed on an uppermost portion of the body 1. Prints 3 indicating the outer diameter of the three induction heating coils are done on the top plate 2 and each induction heating coil 4 is disposed under the top plate 2 in a position corresponding to the print 3 of the induction heating coil. A feature of Embodiment 1 is the large difference created between the outer diameters of the right and left induction heating coils 4. For example, the outer diameter of an induction heating coil 4a on the left side is configured to be about 1.5 to about 2 times the size of an induction heating coil 4b on the right side. Since both employs a winding wire that has substantially the same width, the winding number increases in accordance with the largeness of the outer diameter of the induction heating coil. The induction heating coil 4a on the left side is used for cooking with the extra-large pot having a large bottom diameter. Further, in an area of the top plate 2 other than the area occupied by the induction heating coil 4a on the left side, an induction heating coil having the second largest outer diameter, which is, in this case, the induction heating coil 4b on the right side, is arranged for cooking with a pot having a moderate bottom diameter. Furthermore, in an substantially center area of the area other than the area of the top plate 2 occupied by the left and right induction heating coils 4a and 4b, that is, on the back side in the center portion of the top plate, an induction heating coil 4c having a further smaller outer diameter is arranged to heat a pot with a small bottom diameter.
Additionally, in order to facilitate usability, a forefront position of a print 3a corresponding to the induction heating coil on the left side viewed from the user and a forefront position of a print 3b corresponding to the right side of the induction heating coil are made to be in line as shown with the broken line.
Since each size of the prints 3a and 3b on the top plate 2 corresponds to the outer diameter of the corresponding induction heating coils 4a and 4b, the forefront positions of the left and right induction heating coils 4a and 4b are also in line as shown with the broken line.
With such a configuration as above, the occupied space of each induction heating coil 4 in the body 1 can be utilized effectively, and usability can be improved.

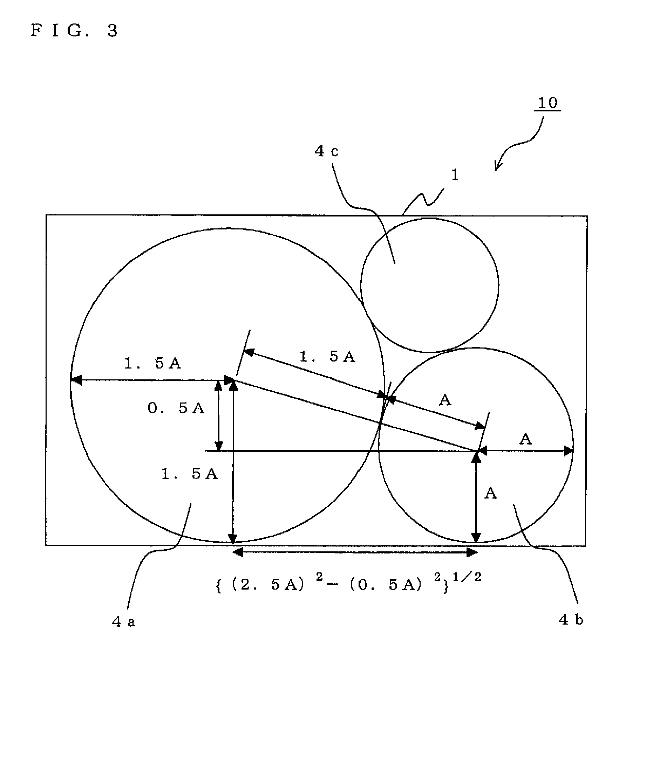

Fig. 3 is an explanatory diagram illustrating the relation of the outer diameters of induction heating coils and a limit of the housing space in a housing chamber in the body 1 of the induction cooking system according to Embodiment 1 of the invention.
Here, a case in which the outer diameter of the induction heating coil 4a on the left side is 1.5 times the diameter of the induction heat coil 4b on the right side will be described. The radius of the induction heating coil 4b on the right side is assumed to be A. The area occupied by the left and right induction heating coils 4a and 4b are as below.
The range of the area occupied by the induction heating coils 4a and 4b in the left-right direction is expressed by the following equation (1).

$$1.5A + \{(2.5A)^2 - (0.5A)^2\}^{(1/2)} + A \qquad (1)$$

Here, the number after the ^ is a multiplier.

The value is about 4.95A.

This 4.95A needs to be within the length of the body 1 in the left-right direction.

4.95A < (length of the body 1 in the left-right direction)

When performing a calculation, in a similar manner, of a case in which the outer diameter of the induction heating coil 4a on the left side is 2 times the diameter of the induction heat coil 4b on the right side, then

5.83A < (length of the body 1 in the left-right direction).

From the above, in order to satisfy a condition in which the outer diameter of one of the left and right induction heating coils 4 is 1.5 to 2 times the diameter of the other induction heating coil 4 while considering the gap needed between the induction heating coils 4, the length of the body 1 in the left-right direction needs to satisfy the following condition.

5.83A < (length of the body 1 in the left-right direction)

Further, when the outer diameter of the induction heating coil 4a on the left side is 1.5 times the diameter of the induction heat coil 4b on the right side, the range of the area occupied by the induction heating coils 4a and 4b in the front-back direction is expressed as 3A.

This 3A needs to be within the length of the body 1 in the front-back direction.

That is, 3A < (length of the body 1 in the front-back direction)

When performing a calculation, in a similar manner, of a case in which the outer diameter of the induction heating coil 4a on the left side is 2 times the diameter of the induction heat coil 4b on the right side,

4A < (length of the body 1 in the front-back direction)

From the above, the radius A of the induction heating coil 4b on the right side needs to satisfy the following length.

(length of the body 1 in the left-right direction) > 5.83A,

AND (length of the body 1 in the front-back direction) > 4A.

Note that although in the above example, the induction heating coil 4a for the extra-large pot is arranged on the left side and the induction heating coil 4b having an outer diameter that is substantially equivalent to those of conventional induction heating coils is arranged on the right side, the positional arrangement may be opposite. That is, the induction heating coil 4a for the extra-large pot may be arranged on the right side and the induction heating coil 4b may be arranged on the left side. Also in this case, in order to facilitate the usability of the user, the forefront positions of the left and right induction heating coils 4a and 4b need to be in line as shown with the broken line.

Further, although in the above example, the position of the user is assumed to be substantially in the middle, the position of the side having the induction heating coil with an outer diameter that is substantially equivalent to those of conventional induction heating coils may be moved up.

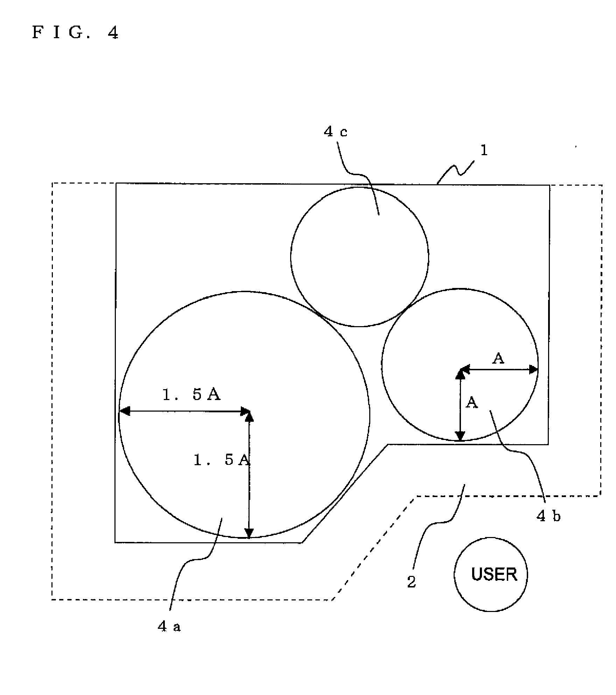

Additionally, although the top plate is configured to be rectangular, the shape of the top plate and the body casing may be changed in the above example. For example, as shown in Fig. 4, the shape of each of the top plate and the body casing may be changed such that the induction heating coil 4a for the extra-large pot and the top plate 2 protrude out towards the front side. In this case, although the forefront edge of the induction heating coil 4a and the forefront edge of the induction heating coil 4b are not in line in the front-back direction, when the user is cooking while placing two or more pots, such as the extra-large pot and a large pot, at the same time, the user only needs to move close to the heating port on the right side and slightly turn his/her body horizontally to cook with the two pots. Further, in this case, since the user does not have to reach out his/her arm to the left/right, the load created when stretching ones arm to carry a heavy pot can be reduced substantially. Accordingly, the user can enjoy comfortable cooking. This kind of cooking apparatus is preferably used when it is disposed in a corner of a kitchen having a corner.

Reference Signs List

1 body; 2 top plate; 3, 3a, 3b, 3c print of the induction heating coil; 4, 4a, 4b, 4c induction heating coil; 5 induction cooking system.

**Claims**

1. An induction cooking system, comprising:

   a body (1) including a housing chamber housing a group of induction heating coils (4); and
   a top plate (2) on which a heated object heated for cooking with each induction heating coil (4) is placed, the top plate (2) being disposed on the upper portion of the body (1), wherein
   the group of induction heating coils (4) includes a first induction heating coil (4a) and a second induction heating coil (4b), and
   an outer diameter of the first induction heating coil (4a) is 1.5 to 2 times an outer diameter of the second induction heating coil (4b).

**2.** An induction cooking system, comprising:

a body (1) including a housing chamber housing a group of induction heating coils (4); and
a top plate (2) on which a heated object heated for cooking with each induction heating coil (4) is placed, the top plate (2) being disposed on the upper portion of the body (1), wherein
the group of induction heating coils (4) includes a first induction heating coil (4a) that has an outer diameter substantially matching a bottom diameter of an extra-large pot, a second induction heating coil (4b) that has an outer diameter smaller than the outer diameter of the first induction heating coil (4a), and a third induction heating coil (4c) that has an outer diameter smaller than the outer diameter of the second induction heating coil (4b).

**3.** The induction cooking system of claim 2, wherein the first induction heating coil (4a) is arranged in a front side of the top plate (2) in either a right or left side viewed from a user, the second induction heating coil (4b) is arranged in a front area of the top plate (2) other than the first area, and the third induction heating coil (4c) is arranged in an area of the top plate (2) other than the first area and the second area.

**4.** The induction cooking system of claim 2 or 3, wherein an outer diameter of the first induction heating coil (4a) is 1.5 to 2 times an outer diameter of the second induction heating coil (4b).

**5.** The induction cooking system of any one of claims 1 to 4, wherein a forefront edge of a print (3a) of the first induction heating coil (4a) and a forefront edge of a print (3b) of the second induction heating coil (4b) on the top plate (2) as viewed from a user are arranged to be the same distance from a foreside of the top plate (2) in the front-back direction.

**6.** The induction cooking system of claim 5, wherein when assuming a radius of the second induction heating coil (4b) to be A, dimensions of the body (1) satisfies the following conditions:

(length of the body 1 in the left-right direction) > 5.83A,
AND (length of the body 1 in the front-back direction) > 4A.

**7.** The induction cooking system of any one of claims 1 to 4, wherein shapes of the top plate (2) and a casing of the body (1) that houses the induction heating coil for the extra-large pot are changed so as to protrude out towards the user.

F I G. 1

F I G . 2

10

1

3 c

2

5

3 a

3 c

3

FIG. 3

$$\{ (2.5A)^2 - (0.5A)^2 \}^{1/2}$$

F I G. 4

4 c

1

1. 5 A

1. 5 A

A

A

4 b

4 a

2

USER

<div style="text-align:center">**INTERNATIONAL SEARCH REPORT**</div>

| International application No. |
| --- |
| PCT/JP2011/000822 |

**A. CLASSIFICATION OF SUBJECT MATTER**
*H05B6/12*(2006.01)i

According to International Patent Classification (IPC) or to both national classification and IPC

**B. FIELDS SEARCHED**

Minimum documentation searched (classification system followed by classification symbols)
H05B6/12

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2003-77629 A  (Matsushita Electric Industrial Co., Ltd.), 14 March 2003 (14.03.2003), claim 7; paragraphs [0012], [0018]; fig. 1, 8 (Family: none) | 1 |
| X | JP 2007-26789 A  (Nichiwa Electric Corp.), 01 February 2007 (01.02.2007), paragraph [0026]; fig. 1, 2 (Family: none) | 2 |
| X<br>Y | JP 2004-207105 A  (Mitsubishi Electric Corp.), 22 July 2004 (22.07.2004), paragraph [0007]; fig. 1, 2 (Family: none) | 2,3<br>4-6 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 17 May, 2011 (17.05.11) | 31 May, 2011 (31.05.11) |

| Name and mailing address of the ISA/<br>Japanese Patent Office | Authorized officer |
| --- | --- |
| Facsimile No. | Telephone No. |

Form PCT/ISA/210 (second sheet) (July 2009)

<div style="text-align:center">10</div>

**INTERNATIONAL SEARCH REPORT**

| International application No. |
| --- |
| PCT/JP2011/000822 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2008-140673 A  (Matsushita Electric Industrial Co., Ltd.), 19 June 2008 (19.06.2008), paragraphs [0002] to [0021] (Family: none) | 4-6 |
| Y | JP 2003-265310 A  (Noritake Co., Ltd.), 24 September 2003 (24.09.2003), paragraphs [0042] to [0044]; fig. 13 to 15 (Family: none) | 5,6 |
| A | JP 2009-94028 A  (Mitsubishi Electric Corp.), 30 April 2009 (30.04.2009), entire text; all drawings (Family: none) | 1-7 |
| P,X | JP 2010-282926 A  (Mitsubishi Electric Corp.), 16 December 2010 (16.12.2010), paragraph [0016]; fig. 4 (Family: none) | 2,3,5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002198164 A
- JP 2005005132 A